Europäisches Patentamt

European Patent Office

Office européen des brevets

(11) Publication number: **0 230 284**
A2

# (12) EUROPEAN PATENT APPLICATION

(21) Application number: 87100516.1

(22) Date of filing: 16.01.87

(51) Int. Cl.⁴: **C 09 D 3/48**

(30) Priority: 18.01.86 JP 8787/86

(43) Date of publication of application: 29.07.87
Bulletin 87/31

(84) Designated Contracting States: **AT BE CH DE ES FR GB IT LI NL SE**

(71) Applicant: **LION CORPORATION, No. 3-7, 1-chome Honjyo, Sumida-ku Tokyo (JP)**

(72) Inventor: **Kakui, Toshio, 9-20-102, Hanamigawa, Chiba-shi Chiba-ken (JP)**
Inventor: **Hirokawa, Shinya, 9-37, Kurosunadai 3-chome, Chiba-shi Chiba-ken (JP)**
Inventor: **Satoh, Jun, 22-13-404, Chuo 3-chome, Warabi-shi Saitama-ken (JP)**
Inventor: **Masamizu, Koji, 7-2, Hibarigaoka Kita 4-chome, Hoya-shi Tokyo (JP)**

(74) Representative: **Kuhnen, Wacker & Partner, Schneggstrasse 3-5 Postfach 1729, D-8050 Freising (DE)**

(54) Coating agent removable in water.

(57) This invention relates to a coating agent capable of forming film removable in water which is applied to, for example, articles which tend to become dirt, e.g., ventilator fans used in kitchens of homes. The coating agent contains a cross-linkable polymer which, at the time of being crosslinked, is water-insoluble and capable of absorbing water by an amount which is 2 to 200 times as large as the weight of the polymer itself. The cross-linkable polymer may be a hydrophilic polymer which has, as the hydrophilic group, carboxyl groups (carboxylate groups) and/or hydroxyl groups, and a cross-linking agent.

SPECIFICATION

TITLE OF THE INVENTION

COATING AGENT REMOVABLE IN WATER

BACKGROUND OF THE INVENTION

(1)  Field of the Invention

The present invention relates to a coating agent capable of forming a film removable in water, which can coat, for the purpose of protection, surfaces of various articles which tend to become dirt or be damaged, and which can easily be separated and removed from these surfaces simply by being dipped in water when it is desired to remove the film.

(2)  Description of the Prior Art

It has been known to form a protective coating layer on the surfaces of various articles which tend to become heavily dirt, e.g., kitchen ventilator fans, as well as articles which are so complicated in shape that the cleaning is extremely difficult.  When cleaning such an  article, the protective coating layer is dissolved and removed as the article is dipped in water, so that the clean surface of the article reveals.  Various types of coating agents have been proposed heretofore.  For instance, Japanese Patent Pre-examined Publication (KOKAI) No. 35904/1980 proposes to use a water-soluble polymeric agent such as polyvinyl alcohol. This type of coating agent, however, suffers from a disadvantage in that, since the dirt on ventilator fans usually consists of oil and water, the water-soluble polymeric agent tends to be dissolved during the use of the ventilator fan due to contact with steam or moisture. In addition, the article coated with this type of coating agent cannot be cleaned satisfactorily by rinsing with water solely, unless the rinsing with water is accompanied by washing with a suitable cleaner.

Japanese Patent Pre-examined Publication No. 18664/1981 discloses the use of a coating agent essentially consisting of an oil-soluble polymeric substance such as urethane resin. This coating agent, however, requires that the coating film must have a large thickness because the film has to be peeled off manually. In addition, the film tends to stick to the article surface, so that a laborious work is required for completely removing the coating film.

Japanese Patent Pre-examined Publication No. 240770/1985 teaches the use of a partially saponified polyvinyl acetate, having a mean polymerization degree of 50 to 1500 and saponification degree of 10 to 50% mol. This coating agent is still unsatisfactory in that the removal of the coating film essentially requires wiping off of the film after making the latter contact with water.

## SUMMARY OF THE INVENTION

Accordingly, an object of the present invention is to provide a coating agent which exhibits superior protection effect simply by being applied in the form of a thin film, the film being easily separable from the article surface together with dirts attaching thereto, upon absorption of water merely by being dipped in water to such an extent that the film and dirts are completely washed away when the article is placed in flowing water.

Another object of the present invention is to provide a coating agent removable in water which can be applied to form a superior coating film even at room temperature and which has a high stability to withstand a long storage in the form of a solution.

The present invention is based upon a discovery that the above-described objects can be accomplished by the use of a specific cross-linkable polymer.

Thus, the present invention provides a coating agent removable in water, containing a cross-linkable polymer which, at the time of being crosslinked, is water-absorbing and water-insoluble.

The above-described and other objects of the present invention will become clear from the following description.

## DESCRIPTION OF THE PREFERRED EMBODIMENTS

Any type of cross-linkable polymer, provided that it becomes water-absorbing and water-insoluble at the time of being crosslinked, can be used as the coating agent of the present invention. It is, however, preferred that the cross-linkable polymer used in the invention is a hydrophilic cross-linkable polymer, particularly a hydrophilic cross-linkable polymer which has, as the hydrophilic group, one selected from a group consisting of carboxyl group, carboxylate group and hydroxyl group. More specifically, the hydrophilic polymer suitably used in the invention can be selected from the following two types (I) and (II).

### Polymers of Type (I)

Polymers of the type (I) include homopolymers of α and β unsaturated carboxylic acids such as acrylic acid, methacrylic acid, maleic acid, itaconic acid, crotonic acid and fumaric acid, and salts thereof, copolymers of two or more of these monomers, and copolymers of these monomers and other components which can form copolymers with these monomers. Examples of the salts include salts of alkali metals such as lithium, potassium and sodium, and salts of alkali earth metals such as calcium. The other components which can form copolymers include acrylamide, vinyl acetate and starch.

Among these polymers, most suitably used are acrylic acid, methacrylic acid and copolymers of salts of these acids and an unsaturated monomer of vinyl group. When such polymers are used, the neutralization ratio of the acid is 10% or higher, preferably 30% or higher.

Thus, practical examples of the hydrophilic polymers of the type (I) include acrylic acid-acrylic acid ester copolymers, acrylic acid-acrylamide copolymer, acrylic acid-olefin copolymers, acrylic acid-vinylether copolymers, acrylic acid-vinylalcohol copolymers, copolymeric saponification products of acrylic acid esters and vinyl acetate, starch-acrylic acid graft copolymers, salts of these polymers, and copolymers obtained by substituting metacrylic acid, maleic anhydride and crotonic acid for acrylic acid in the above-mentioned copolymers.

According to the invention, the hydrophilic polymer is cross-linked so as to have water-absorbing and water-insoluble natures. The cross-linking reaction is conducted by the polymer itself or through reaction between the polymer and a suitable known cross-linking agent. It is preferred to use a cross-linking agent which exhibits a high reactivity with the hydrophilic polymer so as to efficiently form a bridge structure.

Examples of such a cross-linking agent include ethyleneglycol diacrylate, ethyleneglycol methacrylate,

0230284

polyepoxy compounds (ethyleneglycol diglycidylether, polyethylene glycol diglycidylether, sorbitol polyglycidylether, bisphenol A type epoxy resin, novolak type epoxy resin), dialdehydes (glyoxal, glutaraldehyde), haloepoxy compounds (epichlorohydrin, α-methylepichlorohydrin), diamine (ethylene diamine), isocyanate compounds (hexamethylene diisocyanate, 2,4-tolylene diisocyanate), and polyhydric alcohols (ethylene glycol, glycerol 1,4-butadiene). It is also possible to use, as the cross-linking agent, compounds which can conduct ion cross-linking reaction such as salts of polyvalent metals, e.g., halides, sulfates and nitrates of divalent metals such as Ca and Zn and trivalent metals such as Al and Fe.

Preferably, the cross-linking agent is used by an amount which ranges between 0.001 and 20% of the amount of the hydrophilic polymer. When the content of the cross-linking agent falls within the range specified above, the cross-linked polymer exhibits appreciable water-absorbability. More specifically, the cross-linked polymer can absorb ion-exchange water by an amount which is 2 to 200 times, preferably 5 to 100 times, as large as the weight of the polymer itself, so that a film formed by the coating agent containing the polymer can be quickly peeled off the coated surface when contacted by water.

Polymers of Type (II)

The polymers of the type (II) include at least one selected from a group which consists of: polymers having, in their molecules, a carboxylic acid group, a primary hydroxyl group and a sulfonic acid group; mixtures of polymers having, in their molecules, a carboxylic acid group and a primary hydroxyl group, and organic sulfonic acid; mixtures of polymers having, in their molecules, a carboxylic acid group and polymers having, in their molecules, a primary hydroxyl group, one of these two kinds of polymers having, in their molecules, a sulfonic acid group; mixtures of polymers having, in their molecules, a carboxylic acid group, organic compounds having, in their molecules, a primary hydroxyl group, and organic sulfonic acids; and mixtures of polymers having, in their molecules, a primary hydroxyl group, organic compounds having, in their molecules, a carboxylic acid group, and organic sulfonic acids. The amounts of the carboxylic acid group, primary hydroxyl group and the sulfonic acid group are, respectively, 5 to 70 mol%, 20 to 90 mol% and 5 to 30 mol% to the total amounts of the carboxylic acid group, primary hydroxyl group and the sulfonic acid group. In addition, the carboxylic acid group and the primary hydroxyl group are capable of conducting cross-linking reaction.

0230284

Examples of the polymers having carboxylic acid group, primary hydroxyl group and the sulfonic acid group in their molecules include copolymers of a monomer having carboxylic acid groups, a monomer having primary hydroxyl groups and a monomer having sulfonic acid groups. Examples of the polymers having carboxylic acid groups and primary hydroxyl groups in their molecules include copolymers of a monomer having carboxylic acid groups and a monomer having primary hydroxyl groups. Examples of the polymers having carboxylic acid groups in their molecules include homopolymers of a monomer having carboxylic acid groups and copolymers of such a monomer and other polymer or polymers. Examples of the polymers having primary hydroxyl groups in their molecules include homopolymers of a monomer having primary hydroxyl groups and copolymers of such a monomer and other monomer or monomers.

The organic compound having carboxylic groups in its molecules, used in the polymers of the type (II), may be a polymer or a polyhydric carboxylic acid of a low molecular weight having carboxylic acid groups in -its molecules. Similarly, the organic compound having hydroxyl groups in its molecules, used in the polymers of the type (II), may be a polymer or a polyhydric alcohol of a low molecular weight having primary hydroxyl groups in its molecules. A polymer having sulfonic acid groups in its molecules or an organic sulfonic acid of a low molecular weight can be used as the organic sulfonic acid used in the polymers of the type (II).

Among these polymers, polymers having carboxylic groups, primary hydroxyl groups and sulfonic acid groups are preferably used because such polymers exhibit superior strength of the coating film, as well as low level of stickiness.

These polymers of the type (II) can be prepared from the following monomers.

As the monomer having carboxylic acid groups, used suitably are α and β unsaturated carboxylic acids as in the case of the monomers of the type (I). Among these α and β unsaturated carboxylic acids, acrylic acids and methacrylic acids are used most suitably.

The monomer having primary hydroxyl groups may be one selected from a group which consists of: 2-hydroxyl ethyl acrylate or methacrylate; 3-hydroxypropyl acrylate or methacrylate; 4-hydroxybutyl acrylate or methacrylate; 2,3-dihydroxypropyl acrylate or methacrylate; monoester of polyethylene glycol and an acrylate or a methacrylate; monoether of N-(2-hydroxyethyl)acrylamide, acrylic alcohol, ethylene glycol or glycerol and allyl alcohol; and monoether of ethylene glycol or glycerol and vinylalcohol.

As the monomer having sulfonic acid groups, suitably used is one selected from a group consisting of 2-acrylamide-2-methylpropanesulfonic acid, styrenesulfonic acid, allylsulfonic acid, and methallylsulfonic acid.

The polymers mentioned above can have any desired molecular weight. However, good results are obtained when the molecular weight ranges between 1000 and 100000, preferably between 3000 and 50000. Although the polymers are prepared only from these polymers, it is possible to obtain the polymers through copolymerization with a low-grade ester of acrylic acid or methacrylic acid, in order to improve the coating property of the coating film. When such a copolymerization with the low-grade ester is employed, the amount of the low-grade ester must be not greater than 50 mol% in terms of the ratio of the mol number of the ester groups to the total mol numbers of the carboxylic acid groups, primary hydroxyl groups, sulfonic acid groups and the ester groups, otherwise the self-cross linking reaction is not sufficiently conducted at below the room temperature, thus failing to form a coating film which can come off through absorption of water.

Examples of the polyhydric carboxylic acid, polyhydric alcohol and organic sulfonic acid, suitable for use in the polymers of the type (II), are as follows. Namely, malonic acid, succinic acid, citric acid, malic acid, tartaric acid and phthalic acid can be used as the polyhydric carboxylic acid. As the polyhydric alcohol, suitably used are ethylene glycol, glycerol, polyethylene glycol, 1,3-propanediol, and 1,4-buthanediol. Toluenesulfonic acid, ethanesulfonic acid and butanesulfonic acid are suitable for use as the organic sulfonic acid.

It is very important that the polymer of the type (II) contains either the carboxylic acid groups or the primary hydroxyl groups. On the other hand, the sulfonic acid groups can exist in any suitable form, provided that these groups effectively work as a catalyst for promoting the reaction for forming esters from the carboxylic acid groups and the first grade hydroxyl groups. In addition, the amounts of the carboxylic acid groups, primary hydroxyl groups and the sulfonic acid groups in the coating composition of the invention containing a polymer belonging to the type (II) are selected to range between 5 and 7 mol%, 20 and 90 mol% and 5 and 30 mol%, preferably between 10 and 50 mol%, 30 and 80 mol% and 7 and 25 mol%, respectively, in terms of the mol ratio to the total amounts of these groups. If this condition is not met, the cross-linking reaction does not take place at temperatures below the room temperature, after the application of the coating agent to the objective article. In addition, such a coating agent is dissolved in water, rather than coming off by water absorption.

The carboxylic acid groups and the sulfonic acid groups in the polymer of the type (II) may be partly neutralized by an organic amine or an inorganic alkali. The ratio of the neutralization, however, should be 50 mol% or less to the total amounts of the carboxylic acid groups and the sulfonic acid groups, otherwise the cross-linking reaction does not take place at temperatures below the room temperature.

The use of a polymer belonging to the type (II) offers, over the use of a polymer of the type (I), advantages in that the coating agent can form a coating film of a superior property even at the room temperature without any heating for promoting the cross-linking reaction and in that the coating agent in the form of a solution exhibits a high shelf stability.

The coating agent of the present invention is applied to the surface of the objective article, preferably in the form of a solution. Examples of solvent which is suitable for use in forming such a solution include water, methanol, ethanol, isopropanol, acetone, N,N-dimethylformamide, methyl cellosolve, ethyl cellosolve, butyl cellosolve and mixtures of two or more of these solvents. Among these solvents, most suitably used are water and alcohol, particularly a mixture solvent of water and ethanol or isopropanol mixed at a ratio between 5/1 and 1/9. The concentration of the coating agent in the solution is determined suitably in view

0230284

of the viscosity of the solution and the easiness of application. Usually, a good result is obtained when the concentration is 5 to 50 wt%, particularly 10 to 30 wt%.

In order to improve the wettability for the purpose of facilitating the application of the coating agent, it is effective to add 0.1 to 10 wt% of an anionic surfactant or a nonionic surfactant. It is also possible to add, in accordance with the uses of the coating agent, an additive such as a plasticizer, an anti-oxidation agent, an ultraviolet absorbent, a pigment or a dyestuff.

In the actual use of the coating agent containing the above-mentioned polymer, the solution containing the polymer is preferably applied by means of a brush or by spraying. After the application, the article with the layer of the coating agent formed thereon is left still or, as required, heated, so that inter-molecular bridges are formed through cross-linking reaction.

The reason why the coating film formed by the coating agent of the present invention can easily come off the surface of the article when contacted by water has not been definitely clarified. However, it is considered that the cross-linked polymer in the coating film swells upon absorption of water so as to reduce the bonding strength between the coating film and the surface of the article, while reducing the mechanical strength of the polymer. The

—13—

easy separation and collapse of the coating film may be attributed to this fact.

When the coating agent of the present invention contains a polymer of the type (II), cross-linking reaction does not take place insofar as the agent is stored in the form of a solution. However, once the solution is applied to the surface of the objective article, the solvent is evaporated and the cross-linking reaction is promoted by the action of the sulfonic acid, thus enabling the coating agent to form a polymeric coating film which can absorb water and which can easily come off due to swelling as a result of the water absorption.

The coating agent in accordance with the invention can be applied without difficulty by a brush or a spray even to articles having complicated configurations. Any dirt attaching to the surface of the coating film, even if the dirt is degenerated due to oxidation by air, can easily be removed together with the coating film, simply by dipping of the article in water or spray of water to the surface of the article.

Thus, the coating agent of the present invention eliminates the necessity of laborious works for washing, cleaning and separation of coating film, without any risk for the article to be damaged.

The coating agent of the present invention enables the coating film to be removed easily by means of water. The coating agent, therefore, can be used for the purpose of provisional protection of the surface of various articles such as automobiles, aircrafts, mechanical parts, metallic articles for use in homes, products made of non-ferrous metals, articles made of plastics such as ventilator fans, glasswares and rubber products, in order to protect the surfaces of these products against dirt for a transient period between the manufacture and delivery to the users.

Furthermore, the coating agent in accordance with the present invention can be used also as an adhesive which looses its stickiness upon contact with water. To this end, the hydrophilic monomer containing carboxylic acid group and/or the hydroxyl group are treated to form copolymer with a soft monomer such as butyl acrylate or 2-ethylhexyl acrylate and the thus formed copolymer, with addition of a suitable cross-linking agent, is dissolved in a solvent so as to form a solution which in turn is applied to a suitable carrier such as a sheet of paper, pulp, or a plastic.

Some examples of the coating agent in accordance with the present invention will be described hereinafter. It is to be understood, however, these examples are only illustrative and are not intended for restricting the scope of the invention.

Example 1

Monoethanol amine salt of poly (acrylate/methylacrylate = 5/5 in terms of mol ratio) (molecular weight 50,000) was prepared. 20% of the monoethanol amine salt, together with ethylene glycol diglycidyl ether which was added by 2% to the solid content of the above-mentioned polymer, was dissolved in a solvent which was a 5/5 mixture of water and ethanol, thus preparing .a solution containing a coating agent in accordance with the present invention. The thus prepared solution was applied to the blades of a 6-blade household ventilator fan of 30cm diameter. made of a styrene-acrylonitrile copolymer). The coating layer on the fan blades was dried for 10 hours at 20°C so as to form a coating film on the blade surfaces. The blades were then attached to the main part of the ventilator. The ventilator fan was then put into use in a kitchen for 10 days to experience various cooking which generate oily smoke, e.g., oil frying and fish baking, so that oily dirts attached to the blade surfaces. Then, the blades were detached from the fan body and were immersed in water bath for a predetermined time. The blades were then taken out of the water bath and the conditions of the blade surfaces were visually checked. The results are shown in Table 1. In this table the marks ○ and × represent, respectively, good surface condition, i.e., complete removal of contaminants for recovering the original surface, and not-good surface condition, i.e., incomplete removal of the dirt.

When the cross-linkable polymer used in this Example was crosslinked, it was a water-insoluble polymer and could absorb ion-exchange water by an amount which is 10 times as large as the weight of the polymer itself.

Example 2

As the polymer, 25% of monoethanol amine salt of poly(acrylate/methyl acrylate = 6/4 in terms of mol ratio) (molecular weight 20,000) was used and dissolved in a solvent which was a mixture of methanol and water mixed at a ratio methanol/water = 7/3. Test was conducted with the thus formed solution, under the same conditions as those employed in Example 1, and the performance was evaluated in the same way as that in Example 1. When the cross-linkable polymer used in this Example was crosslinked, it was a water-insoluble polymer which could absorb water by amount 40 times as large as the weight of the polymer itself.

Example 3

As the polymer, 15% of sodium salt of poly(methacrylate/methyl acrylate = 5/5 in terms of mol ratio)(molecular weight 50,000) was used and dissolved in a solvent which was a mixture of methanol and water mixed at a ratio methanol/water = 2/8. Test was conducted with the thus formed solution, under the same conditions as those employed in Example 1 except that the fan blades were made of polypropylene, and the performance was evaluated in the same way as that in Example 1. When the cross-linkable polymer used in this Example was crosslined, it was a water-insoluble polymer which could absorb water by amount 10 times as large as the weight of the polymer itself.

Example 4

As the polymer, 20% of ammonium salt of poly(methacrylate/ethyl acrylate = 3/7 in terms of mol ratio)(molecular weight 70,000) was used and dissolved in a solvent which was a mixture of ethanol and water mixed at a ratio ethanol/water = 3/7. Test was conducted with the thus formed solution, under the same conditions as those employed in Example 3 except that sorbitol polyglycidyl ether was used as the cross-linking agent, and the performance was evaluated in the same way as that in Example 3. When the cross-linkable polymer used in this Example was crosslinked, it was a water-insoluble polymer which could absorb water by amount 5 times as large as the weight of the polymer itself.

Example 5

As the polymer, 20% of monoethanol amine salt salt of poly(methacrylate/2-hydroxyethyl methacrylate/methyl acrylate = 3/2/5 in terms of mol ratio)(molecular weight 20,000) was used and dissolved in a solvent which was a mixture of ethanol and water mixed at a ratio ethanol/water = 5/5. The solution was applied to the fan blades, followed by 24-hour drying at 60ºC, and the performance was evaluated in the same way as that in Example 1. When the cross-linkable polymer used in this Example was crosslined, it was a water-insoluble polymer which could absorb water by amount 20 times as large as the weight of the polymer itself.

Comparative Example 1

A coating agent was ·prepared under the same condition as Example 1, except that no cross-linking agent was added.

Comparative Example 2

20% aqueous solution of polyvinyl alcohol (GL-05 produced by Nippon Synthetic Chemical Industry Co., Ltd.) was applied to the fan blades. After 10-hour drying at 20ºC, the blades were attached to the fan body and were subjected to a test and evaluation under the same conditions as Comparative Example 1.

Comparative Example 3

Test and evaluation were conducted under the same conditions as Comparative Example 2, except that 10% aqueous solution of polyvinyl alcohol (GH-17 produced by Nippon Synthetic Chemical Industry Co., Ltd.) was used as the polymer solution.

Comparative Example 4

Test and evaluation were conducted under the same conditions as Comparative Example 1, except that a commercially available ventilator fan coating agent (MRS. COAT produced by Toshiba) was used as the coating agent.

From Table 1, it will be understood that the coating agent in accordance with the present invention containing a cross-linkable polymer exhibits a superior separation property.

Table 1

| | No. | Polymer solutions | Cross-linking agents | Blade materials | Immersion time | Condition of fan surface |
|---|---|---|---|---|---|---|
| Examples | 1 | monoethanol amine salt of poly (acrylic acid/ methyl acrylate) =5/5 | etyleneglycol diglycidyl ether | styrene-acrylonitrile copolymer | 1 | ○ |
| | 2 | monoethanol amine salt of poly (acrylic acid/ ethyl acrylate) = 7/3 | etyleneglycol diglycidyl ether | styrene-acrylonitrile copolymer | 0.5 | ○ |
| | 3 | sodium salt of poly (methacrylic acid/ methyl acrylate)=5/5 | etyleneglycol diglycidyl ether | polypropylene | 1 | ○ |
| | 4 | ammonium salt of poly (methacrylic acid/ ethyl acrylate) = 3/7 | sorbitol polyglycidyl ester | polypropylene | 2 | ○ |
| | 5 | monoethanol amine salt of poly (acrylic acid/2-hydroxyethyl methacrylate/methyl acrylate) = 3/2/5 | _ * | styrene-acrylonitrile copolymer | 3 | ○ |
| Comparative examples | 1 | monoethanol amine salt of poly (acrylic acid/ methyl acrylate) =5/5 | _ | styrene-acrylonitrile copolymer | 10 | × |
| | 2 | PVA GL-05 | _ | styrene-acrylonitrile copolymer | 20 | × |
| | 3 | PVA GH-17 | _ | styrene-acrylonitrile copolymer | 40 | × |
| | 4 | Commercially available agent (MRS. COAT produced by Toshiba) | _ | styrene-acrylonitrile copolymer | 60 | × |

\* By self cross-linking

Example 6

A copolymer was prepared to contain 30 mol% of acrylic acid, 50 mol% of 2-hydroxy ethyl acrylate and 20 mol% of 2-acrylamide-2-methylpropanesulfonic acid (molecular weight 30,000). 20 wt% of this copolymer was dissolved in 79 wt parts of a solvent which was a water-isopropanol mixture of mixing ratio of 1/1 by weight, and 1 wt% of a nonionic surfactant (LIPONOX NCH (produced by Lion Co., Ltd.). The mixture was stirred to become uniform. The uniform mixture thus formed was applied by a brush to the blades of a home-use 4-blade ventilator fan of 30cm dia. and made of ABS resin. The fan blades with the coating layer thereon were left whole through a night at room temperature. The fan was then subjected to a test use in an actual kitchen of a home for two months. The blades were then detached from the fan body and were immersed in water in a washbowl. The coating films on the blades were completely separated from the blades in two minutes when left in the water. Oily dusts and other dirts also were completely removed from the blade surfaces together with the coating films, thus recovering the original clean surfaces of the fan blades.

In order to confirm the shelf stability, the aqueous solution of the water-removable coating agent of the invention prepared as described above was left for 1 month in a drier maintaining an atmosphere of 45ºC. The solution

was then applied to the fan blades and the ventilator fan with these blades was subjected to a test use conducted for two months. A separation test was carried out under the same condition as above. The original clean surfaces of the fan blades were recovered in 3 minutes when the blades were immersed and left in water.

Example 7

A solution was prepared from 17 wt parts of a copolymer (molecular weight 70,000) of 35 mol% of acrylic acid and 65 mol% of 2-hydroxyethyl acrylate, 3 wt parts homopolymer (molecular weight 10,000) of 2-acrylamide-2-methylpropanesulfonic acid, 1 wt part of LIPONOX NCH, and 79 wt parts of a mixture solvent consisting of 1/1 (wt ratio) mixture of water and isopropanol. A separation test was conducted using this solution, under the same conditions as Example 6. Dirts were removed completely by 4-minute immersion in water. The solution was left for 1 month in a drier maintaining an atmosphere of 45ºC. The solution was held stably without exhibiting any tendency for gelation.

Example 8

The copolymer employed in Example 7 was mixed with p-toluenesulfonic acid at various mixing ratios. 20 wt% of such mixtures were added to a solvent which was water-isopropanol mixture consisting of a mixture of water and isopropanol mixed at weight ratio of 1/1 and containing 1 wt part of LIPONOX NCH, thus preparing solutions having different compositions. A separation test was conducted using these solutions, under the same condition as that employed in Example 6, the results of which are shown in Table 2. In Table 2, the marks ○ and ✕ represent, respectively, good surface condition, i.e., complete removal of dirts for recovering the original surface, and not-good surface condition, i.e., incomplete removal of the dirts.

Table 2

| Samples | amount of addition of copolymer (weight parts) | amount of P-toluene sulfonic acid (weight parts) | carboxylic acid group/primary hydroxyl group/sulfonic acid group (mol%, calculated value) | immersion time | surface condition of fan |
|---------|------|------|----------|----|----|
| a | 20 | 0 | 35/65/0 | 20 | ✕ |
| b | 19 | 1 | 34/63/3 | 10 | ✕ |
| c | 18 | 2 | 33/61/6 | 10 | ○ |
| d | 15 | 5 | 29/55/16 | 2 | ○ |
| e | 13 | 7 | 27/49/24 | 4 | ○ |
| f | 10 | 10 | 22/41/37 | 10 | ✕ |

Example 9

A solution was prepared from 15 wt parts of a copolymer (molecular weight 80,000) of 80 mol% of acrylic acid and 20 mol% of 2-acrylamide-methylpropanesulfonic acid, 5 wt parts of ethyl glycol, 1 wt part of LIPONOX NCH, and 79 wt parts of a mixture solvent consisting of 7/3 (wt ratio) mixture of water and isopropanol. A separation test was conducted using this solution under the same conditions as Example 6. Dirts were removed completely by 7-minute immersion in water. The solution was left for two weeks in a drier maintaining an atmosphere of 45°C. The solution was held stably without exhibiting any tendency for gelation.

Example 10

A solution was prepared from 17 wt parts of a copolymer (molecular weight 50,000) of 80 mol% of 2-hydroxymethyl acrylate and 20 mol% of 2-acrylamide-2-methylpropanesulfonic acid, 3 wt parts of citric acid, 1 wt part of LIPONOX NCH, and 79 wt parts of a mixture solvent consisting of 7/3 (wt ratio) mixture of water and isopropanol. A separation test was conducted using this solution, under the same conditions as Example 6. Dirts were removed completely by 6-minute immersion in water. The solution was left for two weeks in a drier maintaining an atmosphere of 45°C. The solution was held stably without exhibiting any tendency for gelation.

Example 11

A solution was prepared from 30 wt parts of a copolymer (molecular weight 20,000) of 35 mol% of acrylic acid, 40 mol% of ethyleneglycol monoallylether and 25 mol% of 2-acrylamide-2-methylpropanesulfonic acid, 1.5 wt parts of LIPONOX NCH, and 68.5 wt parts of a mixture solvent consisting of 1/1 (wt ratio) mixture of water and ethanol. A separation test was conducted using this solution, under the same conditions as Example 6. Dirts were removed completely by 3-minute immersion in water. The solution was left for one month in a drier maintaining an atmosphere of 45°C. The solution was held stably without exhibiting any tendency for gelation.

0230284

WHAT IS CLAIMED IS:

1. A coating agent removable in water containing a cross-linkable polymer which, at the time of being crosslinked, is capable of absorbing water and which is insoluble in water.

2. A coating agent according to Claim 1, wherein said crosslinked polymer is capable of absorbing water by an amount which is 2 to 200 times as large as the weight of the polymer itself.

3. A coating agent according to Claim 1, wherein the coating agent contains a hydrophilic polymer which has, as the hydrophilic group, carboxyl groups (carboxylate groups) and/or hydroxyl groups, and contains a cross-linking agent.

4. A coating agent according to claim 3, wherein the cross-linking agent is used in the amount of 0.001 to 20% of the amount of the hydrophilic polymer.

5. A coating agent according to Claim 1, wherein said coating agent is in the form of a solution which contains, as said crosslinkable polymer, a self-crosslinkable hydrophilic polymer.

6. A coating agent according to Claim 1, wherein said crosslinkable polymer includes at least one selected from a group which consists of: polymers having, in their molecules, a carboxylic acid group, a primary hydroxyl group and a sulfonic acid group; mixtures of polymers having, in their molecules, a carboxylic acid group and a primary

—27—

hydroxyl group, and organic sulfonic acid; mixtures of polymers having, in their molecules, a carboxylic acid group and polymers having, in their molecules, a primary hydroxyl group, one of these two kinds of polymers having, in their molecules, a sulfonic acid group; mixtures of polymers having, in their molecules, a carboxylic acid group, organic compounds having, in their molecules, a primary hydroxyl group, and organic sulfonic acids; and mixtures of polymers having, in their molecules, a primary hydroxyl group, organic compounds having, in their molecules, a carboxylic acid group, and organic sulfonic acids, the amounts of the carboxylic acid group, primary hydroxyl group and the sulfonic acid group being, respectively, 5 to 70 mol%, 20 to 90 mol% and 5 to 30 mol% to the total amounts of the carboxylic acid group, primary hydroxyl group and the sulfonic acid group, the carboxylic acid group and the primary hydroxyl group being capable of conducting cross-linking reaction.

7. A coating agent according to Claim 6, wherein said organic compound having primary hydroxyl group in its molecules is a polymer or a polyhydric alcohol of a low molecular weight and having hydroxyl groups in its molecules.

8. A coating agent according to Claim 6, wherein said organic compound having carboxylic acid group in its molecules is a polymer or a polyhydric carboxylic acid of a low molecular weight and having hydroxyl groups in its molecules.

9. A coating agent according to Claim 6 wherein the coating agent is in the form of a solution.

10. A coating agent according to claim 1, wherein the crosslinkable polymer has a molecular weight of 1,000 to 100,000.

11. A coating agent according to claim 1, wherein the coating agent is in the form of a solution containing 5 to 50 wt% of the coating agent.

12. A coating agent according to claim 1, wherein the coating agent contains 0.1 to 10 wt% of an anionic surfactant or a nonionic surfactant.